# EUROPÄISCHE PATENTANMELDUNG

(11) **EP 3 964 993 A1**
(43) Veröffentlichungstag der Anmeldung: **09.03.2022**
(21) Anmeldenummer: 21193903.8
(22) Anmeldetag: 31.08.2021
(51) Int. Cl.: G06F 21/62

(54) **BEREITSTELLUNG VON DATEN EINES KRAFTFAHRZEUGS**

(30) Priorität: 02.09.2020 DE 102020122894
(71) Anmelder: VOLKSWAGEN AG, 38440 Wolfsburg (DE); Audi AG, 85045 Ingolstadt (DE)
(72) Erfinder: MAX, Stephan, 38518 Gifhorn (DE); STINNER, Markus, 80798 München (DE)
(74) Vertreter: Hofstetter, Schurack & Partner

(57) **Zusammenfassung**

Gemäß einem Verfahren zur anonymen Bereitstellung von Daten eines Kraftfahrzeugs (5) wird mittels des Kraftfahrzeugs (5) ein erster Datensatz erzeugt und der erste Datensatz wird mittels einer Fahrzeugrecheneinheit (6) anonymisiert. Mittels der Fahrzeugrecheneinheit (6) werden nutzerbezogene Daten und der anonymisierte erste Datensatz an ein erstes Serversystem (3) übermittelt und die übermittelten nutzerbezogenen Daten werden mittels des ersten Serversystems gelöscht. Der anonymisierte erste Datensatz wird nach der Löschung der nutzerbezogenen Daten mittels des ersten Serversystems an ein zweites Serversystem übermittelt.

## Beschreibung

Die vorliegende Erfindung betrifft ein Verfahren zur anonymen Bereitstellung von Daten eines Kraftfahrzeugs, wobei mittels des Kraftfahrzeugs ein erster Datensatz erzeugt wird und der erste Datensatz mittels einer Fahrzeugrecheneinheit des Kraftfahrzeugs anonymisiert wird und mittels der Fahrzeugrecheneinheit nutzerbezogene Daten und der anonymisierte erste Datensatz an ein erstes Serversystem übermittelt werden. Die Erfindung betrifft ferner einen Serversystemverbund zur Nutzung von Daten eines Kraftfahrzeugs sowie ein Kommunikationssystem.

Im Kontext vernetzter Kraftfahrzeuge werden Fahrzeugsysteme eingesetzt, die Daten von einem Kraftfahrzeug an ein Server-Backend senden. Dabei werden nutzerbezogene und nicht-nutzerbezogene Daten erhoben und übermittelt. Für viele Anwendungen werden jedoch lediglich nicht-nutzerbezogene Daten benötigt oder es werden nutzerbezogene Daten nur in einem geringen Umfang beziehungsweise in eingeschränkter oder anonymisierter Form benötigt. Beispielhafte Nutzungen von nicht-personenbezogenen Daten können dabei den Aufbau einer Wetterkarte mit Messdaten aus einer Fahrzeugflotte, den Aufbau einer Verkehrsflusskarte aus Bewegungsdaten der Fahrzeugflotte, die zentrale Warnung vor erkannten Gefahrenstellen, wie beispielsweise Glatteis oder Unfällen, und dergleichen beinhalten.

Als nutzerbezogene Daten können beispielsweise Kommunikationsdaten, Positionsdaten des Kraftfahrzeugs, entsprechende Zeitstempel oder Fahrzeugidentifikationsdaten erhoben und übermittelt werden. Diese Daten sind für die beschriebenen nicht-nutzerbezogenen Nutzungen gegebenenfalls unerheblich oder nur eingeschränkt erforderlich. Die nutzerbezogenen Daten werden jedoch im Sinne einer sicheren Kommunikation erhoben oder werden zum Teil benötigt, wie beispielsweise im Falle von Positionsdaten, um den erhobenen Datensatz mit einer Karte abzugleichen.

Bei bekannten Ansätzen werden alle nutzerbezogenen und nicht-nutzerbezogenen Daten an das Server-Backend übermittelt und möglichst frühzeitig im Server-Backend anonymisiert. Dies hat jedoch den Nachteil, dass die Datenübertragung selbst nicht anonym erfolgt beziehungsweise nutzerbezogene Daten über die entsprechende Luftschnittstelle übertragen werden müssen. Dies ist aus Gesichtspunkten der Datensicherheit sowie gegebenenfalls aus datenschutzrechtlichen Erwägungen heraus nachteilig.

Im Dokument DE 10 2014 005 589 A1 wird ein Verfahren zur anonymisierten Übertragung von kraftfahrzeugbezogenen Daten vorgeschlagen. Die kraftfahrzeugbezogenen Daten weisen dabei einen Identifikator auf, der autark generiert wird. Zur Anonymisierung der Daten wird auf einem Zentralrechner keine Zuordnung von Identifikator zu dem individuellen Kraftfahrzeug angelegt.

Dieses Verfahren ist jedoch anfällig für Missbrauch, da sowohl der Identifikator als auch die kraftfahrzeugbezogenen Daten auf dem zentralen Rechner vorliegen.

Im Dokument US 2003/0130893 A1 wird ein Verfahren zum Schutz persönlicher Daten beschrieben, die von einem Fahrzeug erzeugt oder erhalten werden. Dabei wird wenigstens ein Datenelement von einem mobilen System, beispielsweise dem Fahrzeug, akquiriert, das eine persönliche Identifizierungsinformation beinhaltet. Die persönliche Identifizierungsinformation wird von dem Datenelement entfernt und das Datenelement wird drahtlos an einen Empfänger übermittelt.

Dadurch wird jedoch lediglich eine formale Anonymisierung erzielt, da dem Datenelement auch nach der Entfernung der persönlichen Identifizierungsinformationen Informationen entnommen werden können, die jedenfalls eine ungefähre Zuordnung der Daten zu einem Benutzer beziehungsweise dem Fahrzeug erlauben können.

Vor diesem Hintergrund ist es eine Aufgabe der vorliegenden Erfindung, ein verbessertes Konzept zur Bereitstellung von Daten eines Kraftfahrzeugs anzugeben, durch das nutzerbezogene Daten mit höherer Zuverlässigkeit geschützt werden können.

Diese Aufgabe wird gelöst durch den jeweiligen Gegenstand der unabhängigen Ansprüche. Vorteilhafte Ausgestaltung und bevorzugte Ausführungsformen sind Gegenstand der abhängigen und nebengeordneten Ansprüche.

Das verbesserte Konzept beruht auf der Idee, nutzerbezogene Daten, die neben einem anonymisierten Datensatz von dem Kraftfahrzeug an ein erstes Serversystem übermittelt werden, mittels des ersten Serversystems zu löschen und den anonymisierten ersten Datensatz danach mittels des ersten Serversystems an ein zweites Serversystem zu übermitteln.

Gemäß dem verbesserten Konzept wird ein Verfahren zur anonymen Bereitstellung von Daten eines Kraftfahrzeugs angegeben, wobei mittels des Kraftfahrzeugs ein erster Datensatz erzeugt wird und der erste Datensatz mittels einer Fahrzeugrecheneinheit des Kraftfahrzeugs anonymisiert wird, insbesondere basierend auf einem vorgegebenen Parametersatz anonymisiert wird. Mittels der Fahrzeugrecheneinheit werden nutzerbezogene Daten und der anonymisierte erste Datensatz, insbesondere drahtlos, an ein erstes Serversystem übermittelt. Die übermittelten nutzerbezogenen Daten werden mittels des ersten Serversystems gelöscht und der anonymisierte erste Datensatz wird nach der Löschung der nutzerbezogenen Daten mittels des ersten Serversystems, insbesondere drahtlos, an ein zweites Serversystem übermittelt.

Der mittels des Kraftfahrzeugs erzeugte erste Datensatz kann beispielsweise durch eines oder mehrere Sensorsysteme des Kraftfahrzeugs und/oder durch die Recheneinheit erzeugt werden. Der Datensatz kann insbesondere weitere nutzerbezogene oder nutzerbeziehbare Daten beinhalten, sowie Daten ohne Nutzerbezug. Unter nutzerbezogenen Daten können beispielsweise Daten verstanden werden, die Rückschlüsse auf die Identität des Kraftfahrzeugs oder eines Nutzers, beispielsweise eines Halters, des Kraftfahrzeugs zulassen oder zulassen können. Nutzerbezogene Daten können also insbesondere kraftfahrzeugbezogene Daten und/oder personenbezogene Daten enthalten. Nutzerbezogene Daten, insbesondere die nutzerbezogenen Daten, die zusätzlich zu dem anonymisierten ersten Datensatz an das erste Serversystem übermittelt werden, können beispielsweise eine IP-Adresse der Fahrzeugrecheneinheit beziehungsweise einer Kommunikationsschnittstelle der Fahrzeugrecheneinheit, eine Netzwerkkartenidentifikationsnummer der Fahrzeugrecheneinheit, sonstige Geräteidentifikationsnummern von Komponenten der Fahrzeugrecheneinheit oder des Kraftfahrzeugs, eine Fahrzeugidentifizierungsnummer, FIN (englisch: "Vehicle Identification Number", VIN), eine Benutzeridentifikationsnummer, eine Kundennummer des Benutzers und so weiter beinhalten. Nutzerbezogene Daten, insbesondere die weiteren nutzerbezogenen Daten, können auch Daten betreffend eine oder mehrere Positionen des Kraftfahrzeugs, beispielsweise eine mittels des Kraftfahrzeugs gefahrene oder geplante Route, beinhalten und/oder Zeitstempel betreffend Sensordaten oder Positionsdaten.

Daten ohne Nutzerbezug können beispielsweise Messdaten, Rohdaten oder vorverarbeitete Mess- beziehungsweise Rohdaten des Sensorsystems, Wetterdaten der Umgebung des Kraftfahrzeugs oder Betriebsdaten des Kraftfahrzeugs, beispielsweise eine Kraftfahrzeuggeschwindigkeit oder Aktivitätsinformationen betreffend Komponenten des Kraftfahrzeugs wie beispielsweise eine Heizvorrichtung, eine Klimaanlage, Scheibenwischer oder eine Beleuchtungseinrichtung des Kraftfahrzeugs beinhalten.

Das Anonymisieren des ersten Datensatzes kann beispielsweise das vollständige oder teilweise Entfernen beziehungsweise Löschen der weiteren nutzerbezogenen Daten, das Modifizieren der weiteren nutzerbezogenen Daten und/oder das Verschleiern der weiteren nutzerbezogenen Daten, beispielsweise von Positionsdaten und Zeitpunkten oder Zeiträumen, beinhalten. Enthält der erste Datensatz beispielsweise Positionsverläufe oder Routen, so kann die Fahrzeugrecheneinheit zum Anonymisieren Teile der Route, beispielsweise einen Startbereich und/oder Zielbereich der Route, entfernen. Durch den vorgegebenen Parametersatz ist dabei insbesondere vorgebeben, welche Teile des ersten Datensatzes entfernt, modifiziert oder verschleiert werden beziehungsweise wie die Modifikation oder Verschleierung durchgeführt wird beziehungsweise wie stark die Verschleierung oder die Modifikation ist.

Bei dem ersten und dem zweiten Serversystem handelt es sich insbesondere um extern zu dem Kraftfahrzeug angeordnete und von dem Kraftfahrzeug unabhängige Systeme, die jeweils eine oder mehrere Serverrecheneinheiten oder Serverknoten aufweisen. Insbesondere kann ein Serversystem mehrere voneinander unabhängige und in einer Kommunikationsverbindung miteinander stehende, gegebenenfalls räumlich verteilte Serverrecheneinheiten oder Serverknoten beinhalten.

Durch die Trennung des ersten Serversystems, welches die nutzerbezogenen Daten löscht, von dem zweiten Serversystem, welches den anonymisierten ersten Datensatz gegebenenfalls zur Nutzung bereitstellen kann, wird die Datensicherheit erhöht, da das zweite Serversystem zu keinem Zeitpunkt über die nutzerbezogenen Daten verfügt. Eine potentiell missbräuchliche Nutzung des anonymisierten ersten Datensatzes würde also einen unberechtigten Zugriff auf zwei unterschiedliche, voneinander unabhängige Serversysteme erfordern. Das erste Serversystem kann dabei als Zwischenbackend angesehen werden, welches den anonymisierten ersten Datensatz an das zweite Serversystem als Zielbackend weiterleitet.

Dadurch, dass die Anonymisierung im Kraftfahrzeug beziehungsweise durch das Kraftfahrzeug erfolgt, werden außerdem weniger personenbezogene oder kraftfahrzeugbezogene Daten über die Luftschnittstelle zwischen Fahrzeugrecheneinheit und erstem Serversystem übertragen, sodass auch dadurch ein Missbrauchsrisiko reduziert wird. Gemäß zumindest einer Ausführungsform des Verfahrens nach dem verbesserten Konzept enthält das erste Serversystem eine Vielzahl, also drei oder mehr, von Serverknoten. Mittels der Fahrzeugrecheneinheit und/oder mittels des ersten Serversystems wird eine Übertragungsroute festgelegt, welche wenigstens zwei Serverknoten der Vielzahl von Serverknoten beinhaltet. Der anonymisierte erste Datensatz wird gemäß der Übertragungsroute von einem Eintrittsknoten der wenigstens zwei Serverknoten zu einem Austrittsknoten der wenigstens zwei Serverknoten übermittelt und der anonymisierte erste Datensatz wird mittels des Austrittsknotens an das zweite Serversystem übermittelt.

Wie bereits oben erwähnt, kann unter einem Serverknoten eine unabhängige Serverrecheneinheit verstanden werden, die mit einem oder mehreren weiteren Serverknoten in einer Kommunikationsverbindung steht.

Die Übertragungsroute definiert dabei insbesondere, über welche Serverknoten der Vielzahl von Serverknoten in welcher Reihenfolge die Übertragung des anonymisierten ersten Datensatzes erfolgen soll, beziehungsweise welcher Serverknoten der Vielzahl von Serverknoten als Eintrittsknoten und welcher Serverknoten der Vielzahl von Serverknoten als Austrittsknoten dienen soll. Dabei kann ein Serverknoten der Vielzahl von Serverknoten gegebenenfalls auch mehrfach in der Übertragungsroute enthalten sein.

In verschiedenen Ausführungsformen kann die Fahrzeugrecheneinheit selbst die Übertragungsroute vollständig festlegen, also insbesondere auch den Eintrittsknoten festlegen. In anderen Ausführungsformen kann der Eintrittsknoten beispielsweise vorgegeben sein. In solchen Ausführungsformen kann der Rest der Übertragungsroute mittels der Fahrzeugrecheneinheit und/oder mittels des ersten Serversystems festgelegt werden.

Das erste Serversystem kann also insbesondere als Cluster von Serverknoten angesehen werden. Mittels dieses Clusters werden die nutzerbezogenen Daten gelöscht und die verbleibenden Daten, also der anonymisierte erste Datensatz, wird, gegebenenfalls mehrfach, zwischen verschiedenen Serverknoten verschickt, sodass eine Re-Identifikation der Fahrzeugrecheneinheit nicht mehr oder nur mit extrem hohem Aufwand möglich ist. Dadurch kann die Datensicherheit stark weiter erhöht werden.

Die Übertragungsroute kann beispielsweise spezifisch für die konkrete Fahrzeugrecheneinheit beziehungsweise das konkrete Kraftfahrzeug festgelegt werden, also insbesondere unabhängig von entsprechenden Übertragungsrouten, die gegebenenfalls für weitere Kraftfahrzeuge einer Kraftfahrzeugflotte festgelegt werden. Dadurch kann die Nachverfolgbarkeit weiter erschwert werden. Zudem kann die Übertragungsroute beispielsweise für weitere Übertragungen von Daten neu festgelegt werden, sodass auch durch eine permanente Überwachung keine Re-Identifikation möglich wird. Die Übertragungsroute kann dabei beispielsweise für eine bestimmte Zeit oder eine bestimmte Anzahl von Datenübertragungen oder für ein bestimmtes Datenvolumen gleich bleiben und dann automatisch neu festgelegt werden. Mit anderen Worten kann die Übertragungsroute dynamisch gewählt werden.

Gemäß zumindest einer Ausführungsform werden die nutzerbezogenen Daten mittels des Eintrittsknotens gelöscht.

Daher liegen nur auf dem Eintrittsknoten die nutzerbezogenen Daten zusammen mit dem anonymisierten ersten Datensatz vor, während auf dem weiteren der wenigstens zwei Serverknoten der Übertragungsroute jeweils ausschließlich der anonymisierte erste Datensatz vorliegt. Dadurch wird die Datensicherheit weiter erhöht.

Gemäß zumindest einer Ausführungsform wird die Übertragungsroute mittels der Fahrzeugrecheneinheit und/oder mittels des ersten Serversystems zufällig festgelegt.

Beispielsweise kann die Fahrzeugrecheneinheit dazu alle Serverknoten der wenigstens zwei Serverknoten gemäß der Übertragungsroute zufällig aus der Vielzahl von Serverknoten auswählen. Alternativ kann der Eintrittsknoten alle weiteren Serverknoten der wenigstens zwei Serverknoten zufällig aus der Vielzahl von Serverknoten auswählen.

Insbesondere wird die Übertragungsroute jedes Mal, wenn sie erneut festgelegt wird, zufällig festgelegt. Dadurch wird erreicht, dass eine gegebene Übertragungsroute nur für eine begrenzte Zeit verwendet wird, was die Identifikation der Fahrzeugrecheneinheit weiter erschwert.

Gemäß zumindest einer Ausführungsform wird der anonymisierte erste Datensatz vor dessen Übermittlung an das erste Serversystem mittels der Fahrzeugrecheneinheit verschlüsselt und der verschlüsselte anonymisierte erste Datensatz wird mittels des zweiten Serversystems entschlüsselt, insbesondere nach der Löschung der nutzerbezogenen Daten durch das erste Serversystem.

Dadurch wird sichergestellt, dass der erste anonymisierte Datensatz nur in verschlüsselter Form gleichzeitig mit den nutzerbezogenen Daten auf dem ersten Serversystem, insbesondere dem Eintrittsknoten, vorliegt. Dadurch wird die Datensicherheit weiter erhöht.

Gemäß zumindest einer Ausführungsform wird der anonymisierte erste Datensatz vor dessen Übermittlung an das erste Serversystem mittels der Fahrzeugrecheneinheit mehrfach verschlüsselt und der verschlüsselte anonymisierte erste Datensatz wird mittels des ersten Serversystems teilweise entschlüsselt. Der teilweise entschlüsselte anonymisierte erste Datensatz wird mittels des zweiten Serversystems entschlüsselt, insbesondere vollständig entschlüsselt.

Dadurch wird erreicht, dass der vollständig entschlüsselte anonymisierte erste Datensatz auf keinem Serverknoten des ersten Serversystems vorliegt, sodass die Datensicherheit weiter erhöht wird.

Insbesondere kann die mehrfache Verschlüsselung als n-fache Verschlüsselung durchgeführt werden, wobei n-1 gleich der Anzahl der wenigstens zwei Serverknoten gemäß der Übertragungsroute entspricht. In solchen Ausführungsformen kann jeder Serverknoten der wenigstens zwei Serverknoten gemäß der Übertragungsroute eine Instanz der teilweisen Entschlüsselung durchführen, also eine Verschlüsselungsschicht entschlüsseln. Der teilweise entschlüsselte anonymisierte erste Datensatz wird dann insbesondere einfach verschlüsselt an die das zweite Serversystem übermittelt, wo er vollständig entschlüsselt werden kann.

Gemäß zumindest einer Ausführungsform wird mittels des zweiten Serversystems vor der Entschlüsselung, insbesondere vor der vollständigen Entschlüsselung, des verschlüsselten oder teilweise entschlüsselten anonymisierten ersten Datensatzes ein Erfolg des Löschens der weiteren nutzerbezogenen Daten überprüft und die Entschlüsselung wird abhängig von einem Ergebnis der Überprüfung durchgeführt.

Insbesondere wird die Entschlüsselung mittels des zweiten Serversystems nur dann oder genau dann durchgeführt, wenn gemäß dem Ergebnis der Überprüfung das Löschen der nutzerbezogenen Daten erfolgreich war. Dadurch kann die Wahrscheinlichkeit dafür reduziert werden, dass ein Teil der weiteren nutzerbezogenen Daten aus unvorhersehbaren Gründen gleichzeitig mit dem vollständig entschlüsselten anonymisierten ersten Datensatz auf dem zweiten Serversystem vorliegt.

Gemäß zumindest einer Ausführungsform beinhalten die nutzerbezogenen Daten die IP-Adresse der Fahrzeugrecheneinheit und/oder eine der Fahrzeugrecheneinheit zugeordnete Kennung.

Die der Fahrzeugrecheneinheit zugeordnete Kennung kann dabei eine Kundenidentifikationsnummer oder eine Fahrzeugidentifizierungsnummer beinhalten.

Gemäß zumindest einer Ausführungsform wird die Anonymisierung mittels der Fahrzeugrecheneinheit basierend auf dem vorgegebenen Parametersatz durchgeführt. Mittels des zweiten Serversystems wird basierend auf dem anonymisierten ersten Datensatz ein durch die Anonymisierung erreichter Anonymisierungsgrad bestimmt. Mittels des zweiten Serversystems wird basierend auf dem Anonymisierungsgrad und insbesondere basierend auf dem vorgegebenen Parametersatz ein angepasster Parametersatz erzeugt und an die Fahrzeugrecheneinheit übermittelt.

Der Anonymisierungsgrad kann als Maß für einen Aufwand, beispielsweise einen Rechenaufwand, angesehen werden, der erforderlich ist, um den anonymisierten ersten Datensatz oder Teile davon dem Kraftfahrzeug oder dem Benutzer des Kraftfahrzeugs zuzuordnen, also eine Re-Identifikation durchzuführen. Der vorgegebene Parametersatz hat dabei insbesondere einen direkten Einfluss auf den erreichten Anonymisierungsgrad. Der vorgegebene Parametersatz liegt dabei insbesondere auch auf dem zweiten Serversystem vor beziehungsweise wird beispielsweise durch das zweite Serversystem vorgegeben.

Der für die Anonymisierung erforderliche Aufwand, um einen gewünschten Anonymisierungsgrad zu erreichen, kann je nach Situation unterschiedlich sein. Befinden sich beispielsweise in einem bestimmten räumlichen und/oder zeitlichen Bereich sehr viele Kraftfahrzeuge, von denen entsprechende Daten erhoben werden, so kann beispielsweise ein relativ geringer Aufwand bei der Anonymisierung dazu führen, dass der anonymisierte erste Datensatz nur noch mit erheblichem Aufwand dem tatsächlich erzeugenden Kraftfahrzeug zugeordnet werden kann. Sind dagegen nur sehr wenige Daten liefernde Kraftfahrzeuge in dem räumlichen und/oder zeitlichen Bereich vorhanden, so ist gegebenenfalls ein höherer Aufwand, beispielsweise eine stärkere Verschleierung oder eine umfassender Entfernung von nutzerbeziehbaren Datenteilen, erforderlich, um den gewünschten Anonymisierungsgrad zu erreichen. Insbesondere kann durch die Anonymisierung eine gewisse Gruppen- oder Flottenanonymität erreicht werden, sodass der anonymisierte erste Datensatz zwar einer Fahrzeuggruppe einer bestimmten Größe zugeordnet werden kann, jedoch nicht einem konkreten Kraftfahrzeug der Route oder Flotte. Je nach Größe der Gruppe kann daher der Anonymisierungsgrad variieren, wobei der Anonymisierungsgrad auch insbesondere durch die Größe der Gruppe gegeben sein kann. Die Größe der Gruppe kann anhand des Parametersatzes beeinflusst werden.

Durch die Anpassung des Parametersatzes beziehungsweise die Erzeugung des angepassten Parametersatzes basierend auf dem bestimmten Anonymisierungsgrad kann der Anonymisierungsaufwand also an die konkret vorliegende Situation angepasst werden, sodass eine höhere Zuverlässigkeit bei der Anonymisierung beziehungsweise beim Erreichen des gewünschten Anonymisierungsgrads erzielt wird, wobei der Aufwand zur Anonymisierung möglichst gering gehalten werden kann.

Gemäß zumindest einer Ausführungsform wird der erste Datensatz mittels der Fahrzeugrecheneinheit und/oder eines Sensorsystems des Kraftfahrzeugs erzeugt, wobei das Sensorsystem insbesondere eines oder mehrere Umfeldsensorsysteme beinhaltet.

Ein Umfeldsensorsystem kann hier und im Folgenden als Sensorsystem verstanden werden, das dazu in der Lage ist, Sensordaten oder Sensorsignale zu erzeugen, welche eine Umgebung des Kraftfahrzeugs abbilden, darstellen oder wiedergeben. Insbesondere können Kameras, Lidarsysteme, Radarsysteme und Ultraschallsensorsysteme als Umfeldsensorsysteme angesehen werden.

Der erste Datensatz kann auch Positionsdaten, die mittels eines digitalen Kartensystems des Kraftfahrzeugs und/oder mittels eines Empfängers für ein globales Navigationssatellitensystem, GNSS, des Kraftfahrzeugs erzeugt werden, beinhalten.

Gemäß zumindest einer Ausführungsform wird der anonymisierte Datensatz und/oder werden davon abhängige Daten mittels des zweiten Serversystems zur Nutzung bereitgestellt. Die Nutzung kann dabei durch das zweite Serversystem selbst erfolgen oder durch eine weitere Identität, die Zugriff auf den anonymisierten ersten Datensatz beziehungsweise die davon abhängigen Daten hat, beispielsweise eine weitere Recheneinheit oder eine Person.

Gemäß zumindest einer Ausführungsform wird mittels des zweiten Serversystems basierend auf dem anonymisierten ersten Datensatz eine Gruppengröße bestimmt, welche einer Anzahl von Kraftfahrzeugen entspricht, auf die der anonymisierte Datensatz bezogen werden kann. Der Anonymisierungsgrad wird abhängig von der Gruppengröße bestimmt oder entspricht der Gruppengröße.

Insbesondere durch die Verschleierung von Orts- und/oder Zeitinformationen des ersten Datensatzes zur Anonymisierung kann eine Gruppenanonymität erzeugt werden, da die entsprechenden anonymisierten ersten Daten dann auf eine ganze Gruppe von Kraftfahrzeugen bezogen werden kann, jedoch nicht bestimmt werden kann, welches Kraftfahrzeug der Gruppe tatsächlich den ersten Datensatz erzeugt hat. Je größer die Gruppe ist, desto sicherer ist der anonymisierte erste Datensatz vor Missbrauch geschützt, da mit der Anzahl von Kraftfahrzeugen in der Gruppe der Aufwand steigt, den ersten Datensatz einem der Kraftfahrzeuge zuzuordnen.

Durch die Anpassung des Parametersatzes abhängig von der Gruppengröße kann daher die durch die Anonymisierung erreichte Gruppengröße angepasst werden, um den erwünschten Anonymisierungsgrad zu erreichen, wobei der gewünschte Anonymisierungsgrad beispielsweise einen vorbestimmten Grenzwert für die Gruppengröße beziehungsweise für die Anzahl von Kraftfahrzeugen beinhaltet oder diesem entspricht.

Gemäß zumindest einer Ausführungsform wird mittels des Kraftfahrzeugs ein zweiter Datensatz erzeugt und der zweite Datensatz wird mittels der Fahrzeugrecheneinheit basierend auf dem angepassten Parametersatz anonymisiert. Der anonymisierte zweite Datensatz wird mittels der Fahrzeugrecheneinheit an das erste Serversystem übermittelt.

Die Ausführungen bezüglich des ersten Datensatzes und des Parametersatzes gelten analog für den zweiten Datensatz und den angepassten Parametersatz. Nachdem der Parametersatz angepasst wurde, ist zu erwarten, dass ein Anonymisierungsgrad, der durch die Anonymisierung des zweiten Datensatzes basierend auf dem angepassten Parametersatz erreicht wird, erhöht wird. Die Datensicherheit betreffend den zweiten Datensatz beziehungsweise weitere analog erzeugte und anonymisierte Datensätze kann dadurch verbessert werden.

Gemäß zumindest einer Ausführungsform ist das Kraftfahrzeug Teil einer Kraftfahrzeugflotte, die eines oder mehrere weitere Kraftfahrzeuge enthält, und der angepasste Parametersatz wird mittels des zweiten Serversystems an eine jeweilige weitere Fahrzeugrecheneinheit jedes weiteren Kraftfahrzeugs der Kraftfahrzeugflotte übermittelt.

Insbesondere kann dadurch erreicht werden, dass alle Kraftfahrzeuge der Kraftfahrzeugflotte entsprechende Datensätze jeweils basierend auf demselben angepassten Parametersatz anonymisieren können. Dadurch kann der Parametersatz beziehungsweise der entsprechende Anonymisierungsgrad proaktiv angepasst werden und somit können die Zuverlässigkeit und Datensicherheit für die gesamte Kraftfahrzeugflotte erhöht werden.

Gemäß zumindest einer Ausführungsform wird mittels jedes weiteren Kraftfahrzeugs der Kraftfahrzeugflotte ein weiterer Datensatz erzeugt und der jeweilige weitere Datensatz wird mittels der jeweiligen weiteren Fahrzeugrecheneinheit basierend auf dem angepassten Parametersatz anonymisiert. Der jeweilige anonymisierte weitere Datensatz wird mittels der jeweiligen weiteren Fahrzeugrecheneinheit an das erste Serversystem übermittelt.

Die dementsprechend übermittelten weiteren anonymisierten Datensätze können analog zu dem übermittelten anonymisierten ersten Datensatz weiterverarbeitet oder zur Nutzung bereitgestellt werden.

Gemäß zumindest einer Ausführungsform enthält der vorgegebene Parametersatz eine Verzögerungsdauer und der anonymisierte erste Datensatz wird mittels der Fahrzeugrecheneinheit gemäß der Verzögerung zeitverzögert an das erste Serversystem übermittelt.

Mit anderen Worten steht der anonymisierte erste Datensatz, gegebenenfalls verschlüsselt, zu einem bestimmten Zeitpunkt zur Übermittlung an das erste Serversystem bereit, die tatsächliche Übermittlung erfolgt bezüglich dieses Zeitpunkts jedoch gemäß der Verzögerungsdauer zeitverzögert. Dadurch wird eine Zuordenbarkeit des anonymisierten ersten Datensatzes zu dem Kraftfahrzeug beziehungsweise zu dessen Benutzer weiter erschwert beziehungsweise die Gruppengröße kann weiter erhöht werden. Dadurch werden die Zuverlässigkeit des Verfahrens beziehungsweise die Datensicherheit weiter erhöht.

Die Anpassung des Parametersatzes beziehungsweise das Erzeugen des angepassten Parametersatzes beinhaltet insbesondere das Anpassen der Verzögerungsdauer. Der zweite Datensatz wird insbesondere gemäß der angepassten Verzögerungsdauer zeitverzögert an das erste Serversystem übermittelt.

Gemäß dem verbesserten Konzept wird auch ein Serversystemverbund zur Nutzung von Daten eines Kraftfahrzeugs angegeben. Der Serversystemverbund weist ein erstes Serversystem auf, das dazu eingerichtet ist, von dem Kraftfahrzeug beziehungsweise einer Fahrzeugrecheneinheit des Kraftfahrzeugs einen anonymisierten ersten Datensatz, der insbesondere basierend auf einem vorgegebenen Parametersatz anonymisiert ist, sowie nutzerbezogene Daten zu erhalten. Das erste Serversystem ist dazu eingerichtet, die übermittelten nutzerbezogenen Daten zu löschen. Der Serversystemverbund weist ein zweites Serversystem auf und das erste Serversystem ist dazu eingerichtet, den anonymisierten ersten Datensatz an das zweite Serversystem zu übermitteln.

Gemäß zumindest einer Ausführungsform des Serversystemverbunds enthält das erste Serversystem eine Vielzahl von Serverknoten. Das erste Serversystem ist dazu eingerichtet, eine Übertragungsroute, die wenigstens zwei Serverknoten der Vielzahl von Serverknoten beinhaltet, festzulegen oder von dem Kraftfahrzeug beziehungsweise der Fahrzeugrecheneinheit zu erhalten. Das erste Serversystem ist dazu eingerichtet, den anonymisierten ersten Datensatz gemäß der Übertragungsroute von einem Eintrittsknoten der wenigstens zwei Serverknoten zu einem Austrittsknoten der wenigstens zwei Serverknoten zu übermitteln und der Austrittsknoten ist dazu eingerichtet, den anonymisierten ersten Datensatz an das zweite Serversystem zu übermitteln.

Weitere Ausführungsformen des Serversystems nach dem verbesserten Konzept folgen direkt aus den verschiedenen Ausführungsformen des Verfahrens nach dem verbesserten Konzept und umgekehrt.

Gemäß dem verbesserten Konzept wird auch ein Kommunikationssystem angegeben, das einen Serversystemverbund nach dem verbesserten Konzept aufweist, sowie eine Fahrzeugrecheneinheit für das Kraftfahrzeug. Die Fahrzeugrecheneinheit ist dazu eingerichtet, einen durch das Kraftfahrzeug erzeugten ersten Datensatz zu anonymisieren, um den anonymisierten ersten Datensatz zu erzeugen und den anonymisierten ersten Datensatz an das erste Serversystem zu übermitteln.

Weitere Ausführungsformen des Kommunikationssystems nach dem verbesserten Konzept folgen direkt aus den verschiedenen Ausführungsformen des Verfahrens nach dem verbesserten Konzept und umgekehrt. Insbesondere ist ein Kommunikationssystem nach dem verbesserten Konzept dazu eingerichtet, ein Verfahren nach dem verbesserten Konzept durchzuführen oder es führt ein solches Verfahren durch.

Die Erfindung umfasst auch die Kombinationen der Merkmale der beschriebenen Ausführungsformen.

Im Folgenden werden Ausführungsbeispiele der Erfindung beschrieben. In den Figuren zeigen:
- Fig. 1: eine schematische Darstellung einer beispielhaften Ausführungsform eines Kommunikationssystems nach dem verbesserten Konzept; und
- Fig. 2: ein Ablaufdiagramm einer beispielhaften Ausführungsform eines Verfahrens nach dem verbesserten Konzept.

Bei den im Folgenden erläuterten Ausführungsbeispielen handelt es sich um bevorzugte Ausführungsbeispiele der Erfindung. Bei den Ausführungsbeispielen stellen die beschriebenen Komponenten jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsbeispiele auch durch weitere der bereits beschriebenen Merkmale der Erfindung ergänzbar.

In den Figuren sind funktionsgleiche Elemente jeweils mit denselben Bezugszeichen versehen.

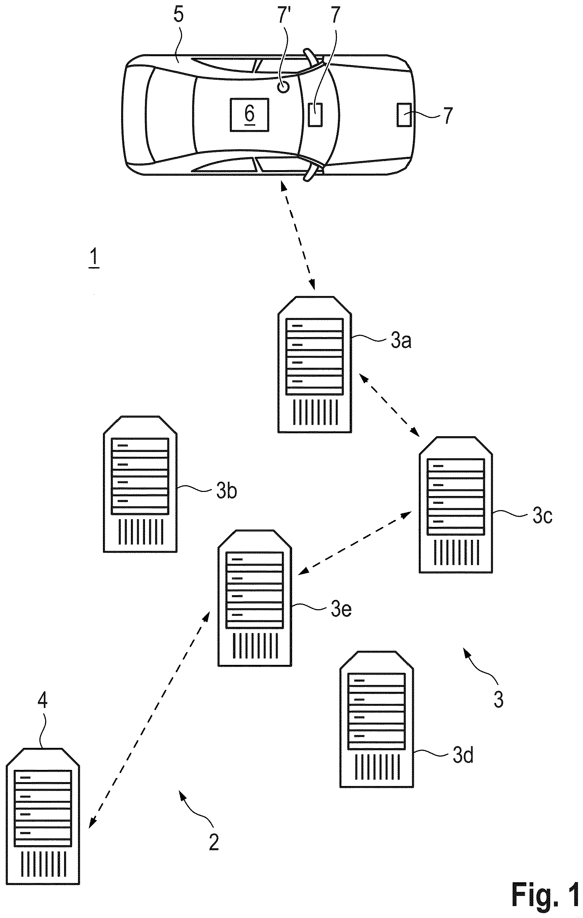

In Fig. 1 ist eine schematische Darstellung einer beispielhaften Ausführungsform eines Kommunikationssystems 1 nach dem verbesserten Konzept dargestellt, das einen Serversystemverbund 2 und eine Fahrzeugrecheneinheit 6 eines Kraftfahrzeugs 5 beinhaltet. Das Kraftfahrzeug 5 kann in verschiedenen Ausführungsformen als Teil des Kommunikationssystems 1 angesehen werden. Das Kraftfahrzeug 5 weist insbesondere eines oder mehrere Sensorsysteme 7, beispielsweise Umfeldsensorsysteme, Geschwindigkeitssensoren, Temperatursensoren und so weiter, auf sowie einen GNSS-Empfänger 7', beispielsweise einen GPS-, GLONASS-, Galileo- und/oder Beidou-Empfänger. Der Serversystemverbund 2 enthält ein erstes Serversystem 3 und ein zweites Serversystem 4. In verschiedenen Ausgestaltungsformen enthält das erste Serversystem 3 eine Vielzahl unabhängiger Serverknoten 3a, 3b, 3c, 3d, 3f, die voneinander und von dem zweiten Serversystem 4 physisch und räumlich getrennt sind.

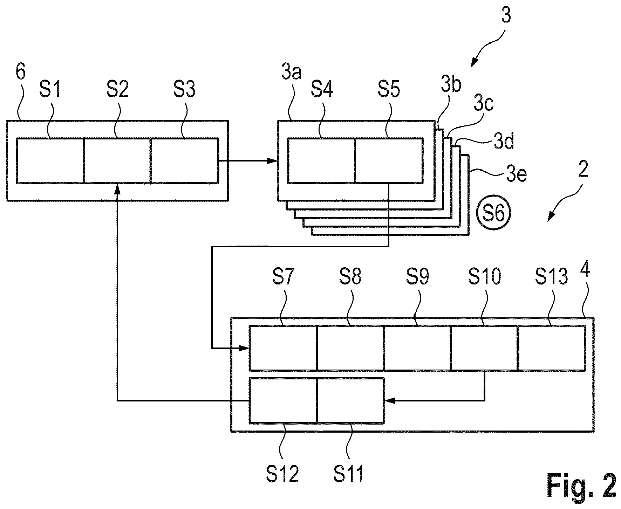

Die Funktionsweise des Kommunikationssystems 1 wird im Folgenden anhand beispielhafter Ausführungsformen eines Verfahrens zur Bereitstellung von Daten des Kraftfahrzeugs 5 gemäß dem verbesserten Konzept näher erläutert, insbesondere unter Bezugnahme auf Fig. 2.

In Fig. 2 ist ein Ablaufdiagramm einer beispielhaften Ausführungsform eines Verfahrens nach dem verbesserten Konzept schematisch dargestellt. Ebenfalls schematisch dargestellt sind der Serversystemverbund 2 sowie die Fahrzeugrecheneinheit 6.

In einem ersten Verfahrensschritt S1 werden mittels des Kraftfahrzeugs 5, beispielsweise anhand der Sensorsysteme 7 und/oder des GNSS-Empfängers 7' sowie gegebenenfalls durch weitere Komponenten des Kraftfahrzeugs 5 und/oder mittels der Fahrzeugrecheneinheit 6, Daten erhoben, die sowohl nicht-nutzerbezogene Daten, wie beispielsweise Umfeldsensordaten, Wetterdaten oder Betriebsdaten des Kraftfahrzeugs beinhalten, beispielsweise eine Kraftfahrzeuggeschwindigkeit, sowie nutzerbezogene oder nutzerbeziehbare Daten, wie beispielsweise Kommunikationsdaten, Positionsdaten des Kraftfahrzeugs 5, Zeitstempel betreffend die Umfeldsensordaten oder die Positionsdaten, Fahrzeugidentifikationsdaten, wie eine FIN und so weiter.

Im Schritt S2 werden die erhobenen Daten mittels der Fahrzeugrecheneinheit 6 anonymisiert. Dazu können beispielsweise Teile der erhobenen Daten entfernt oder gelöscht werden, wie beispielsweise der Name eines Benutzers, Informationen betreffend ein amtliches Kennzeichen des Kraftfahrzeugs 5 oder sonstige, unmittelbar zur Identifizierung des Benutzers oder des Kraftfahrzeugs 5 geeignete Daten. Im Rahmen der Anonymisierung können auch Datenteile entfernt werden, die indirekt zu einer Identifizierung des Benutzers oder Kraftfahrzeugs 5 herangezogen werden können, also pseudonyme Daten. Beispielsweise können Start- und/oder Zielpositionen von mittels des Kraftfahrzeugs 5 zurückgelegten oder geplanten Routen entfernt werden.

Zudem kann es das Anonymisieren beinhalten, Positionsdaten des Kraftfahrzeugs 5, die beispielsweise anhand von Karteninformationen oder von mittels des GNSS-Empfängers 7' empfangenen Signalen erzeugt oder bestimmt wurden, zu verschleiern und/oder entsprechende Zeitpunkte, zu denen sich das Kraftfahrzeug 5 an den entsprechenden Positionen befand, zu verschleiern. Die Verschleierung kann dabei durch künstliches Hinzufügen von Toleranzen oder Fehlern erfolgen oder durch zeitlich verzögertes Verarbeiten oder Hochladen der Daten an den Serversystemverbund 2. Auch Zeitstempel der Positionsdaten können entsprechend entfernt werden.

Die konkreten Maßnahmen zur Anonymisierung hängen letztlich davon ab, für welchen Zweck die Daten des Kraftfahrzeugs 5 verwendet werden sollen. Sollen die Daten beispielsweise dazu dienen, eine Verkehrsflusskarte oder eine Wetterkarte oder dergleichen zu erstellen, so sind, jedenfalls in gewissem Umfang, Positionsdaten und gegebenenfalls auch Zeitdaten oder zeitliche Informationen erforderlich. Die Anonymisierung erfolgt daher basierend auf einem vorgegebenen Parametersatz, der festlegt, welche Teile der Daten entfernt beziehungsweise verschleiert werden sollen und wie stark die Verschleierung durchgeführt werden soll. Den Parametersatz kann die Fahrzeugrecheneinheit 6 beispielsweise von dem Serversystemverbund 2 erhalten.

Durch die Anonymisierung wird insbesondere eine Gruppenanonymisierung erreicht, so dass das Kraftfahrzeug 5 in einer Kraftfahrzeugflotte mit weiteren Kraftfahrzeugen nicht mehr eindeutig identifizierbar ist.

Im gemäß Fig. 2 skizzierten Verfahren beinhaltet das erste Serversystem die Vielzahl von Serverknoten 3a, 3b, 3c, 3d, 3e, wobei die konkrete Anzahl der Serverknoten 3a, 3b, 3c, 3d, 3e rein beispielhaft zu verstehen ist und insbesondere auch größer sein kann als fünf, beispielsweise einige 10, einige 100 oder einige 1000 Serverknoten beinhalten kann.

In Schritt S3 legt die Fahrzeugrecheneinheit 6 beispielsweise eine Übertragungsroute zur Übertragung des anonymisierten ersten Datensatzes fest, indem die Fahrzeugrecheneinheit 6 einen Eintrittsknoten 3a der Vielzahl von Serverknoten 3a, 3b, 3c, 3d, 3e festlegt, einen Austrittsknoten 3e der Vielzahl von Serverknoten 3a, 3b, 3c, 3d, 3e sowie gegebenenfalls einen oder mehrere Zwischenknoten 3c der Vielzahl von Serverknoten 3a, 3b, 3c, 3d, 3e. Außerdem legt die Fahrzeugrecheneinheit 6 eine Reihenfolge der Zwischenknoten 3c fest. In verschiedenen Ausführungsformen kann der Eintrittsknoten 3a auch fest vorgegeben sein. In solchen Ausführungsformen kann der Eintrittsknoten die Übertragungsroute teilweise oder vollständig festlegen, insbesondere die Zwischenknoten 3c und/oder den Austrittsknoten 3e festlegen. Im exemplarischen Beispiel der Fig. 1 besteht die Übertragungsroute aus dem Eintrittsknoten 3a, einem Zwischenknoten 3c und dem Austrittsknoten 3e. Zudem wird in Schritt S3 der anonymisierte erste Datensatz mittels der Fahrzeugrecheneinheit 6 verschlüsselt.

Im Schritt S4 werden die verschlüsselten anonymisierten Daten an den Eintrittsknoten 3a übermittelt. Neben den anonymisierten Daten werden dabei insbesondere auch weitere nutzerbezogene Daten übermittelt, insbesondere eine IP-Adresse der Fahrzeugrecheneinheit 6. Im Schritt S5 werden diese nutzerbezogenen Daten mittels des Eintrittsknotens 3a daher gelöscht. Die Löschung erfolgt dabei insbesondere, ohne dass die verschlüsselten Daten vorher entschlüsselt werden.

Im Schritt S6 wird der anonymisierte erste Datensatz nach dem Löschen der nutzerbezogenen Daten gemäß der Übertragungsroute von dem Eintrittsknoten 3a zu dem Austrittsknoten 3e übermittelt, indem er von dem Eintrittsknoten 3a zu dem Zwischenknoten 3c und von dem Zwischenknoten 3c zu dem Austrittsknoten 3e übermittelt wird. Durch die mehrfache Übermittlung innerhalb des ersten Serversystems 3 kann nahezu ausgeschlossen werden, dass eine Re-Identifikation der Fahrzeugrecheneinheit 6 durchgeführt wird.

Der anonymisierte erste Datensatz wird im Schritt S7 von dem Austrittsknoten 3e an das zweite Serversystem 4 übermittelt. Im optionalen Schritt S8 kann der Erfolg der Löschung der nutzerbezogenen Daten überprüft werden und nur wenn festgestellt wird, dass alle nutzerbezogenen Daten, die zusammen mit den anonymisierten Daten übermittelt wurden, entfernt wurden, werden die Daten weitergegeben beziehungsweise weiterverarbeitet. Im Schritt S9 werden die verschlüsselten und anonymisierten Daten durch das zweite Serversystem 4 entschlüsselt.

In verschiedenen Ausführungsformen kann die Verschlüsselung im Schritt S3 als mehrfache Verschlüsselung ausgestaltet sein, sodass für jeden Serverknoten 3a, 3c, 3e der Übertragungsroute sowie für das zweite Serversystem 4 jeweils eine Verschlüsselungsschicht vorgesehen wird. Im skizzierten Beispiel bedeutet dies, dass die anonymisierten Daten im Schritt S3 beispielsweise vierfach verschlüsselt werden. Jeder Serverknoten 3a, 3c, 3e gemäß der Übertragungsroute kann eine Schicht der Verschlüsselungsschichten entschlüsseln, sodass die anonymisierten Daten im Schritt S7 einfach verschlüsselt an das zweite Serversystem 4 übermittelt werden. Im Schritt S9 kann dann der anonymisierte Datensatz vollständig entschlüsselt werden.

Im Schritt S10 kann eine Qualitätsüberprüfung der Anonymisierung durchgeführt werden. Dazu kann mittels des zweiten Serversystems 4 insbesondere ein durch die Anonymisierung erreichter Anonymisierungsgrad bestimmt werden und beispielsweise mit einem vorgegebenen Grenzwert für den Anonymisierungsgrad verglichen werden. Abhängig von einem Ergebnis des Vergleichs kann im Schritt S11 der Parametersatz zur Anonymisierung der Daten angepasst werden. Dadurch kann die Effektivität oder Wirksamkeit der Anonymisierung verbessert oder schrittweise verbessert werden.

Im Schritt S12 wird der angepasste Parametersatz an die Fahrzeugrecheneinheit 6 beziehungsweise an entsprechende Fahrzeugrecheneinheiten der weiteren Kraftfahrzeuge der Kraftfahrzeugflotte übermittelt. Für weitere Anonymisierungen kann die Fahrzeugrecheneinheit 6 dann den angepassten Parametersatz verwenden. Im Schritt S13 werden die anonymisierten Daten mittels des zweiten Serversystems 4 ihrer beabsichtigen Nutzung zugeführt beziehungsweise zur Nutzung für Dritte bereitgestellt.

Wie insbesondere bezüglich der Figuren erläutert, erlaubt es das verbesserte Konzept, die Datensicherung personenbezogener oder kraftfahrzeugbezogener Daten bei der Nutzung von Daten eines Kraftfahrzeugs zu verbessern und die Zuverlässigkeit des Datenschutzes zu erhöhen.

### Bezugszeichenliste

- 1: Kommunikationssystem
- 2: Serversystemverbund
- 3,4: Serversysteme
- 3a, 3b, 3c, 3d, 3e: Serverknoten
- 5: Kraftfahrzeug
- 6: Fahrzeugrecheneinheit
- 7: Sensorsysteme
- 7': GNSS-Empfänger
- S1 bis S13: Verfahrensschritte

## Patentansprüche

1. Verfahren zur anonymen Bereitstellung von Daten eines Kraftfahrzeugs (5), wobei
- mittels des Kraftfahrzeugs (5) ein erster Datensatz erzeugt wird und der erste Datensatz mittels einer Fahrzeugrecheneinheit (6) des Kraftfahrzeugs (5) anonymisiert wird; und
- mittels der Fahrzeugrecheneinheit (6) nutzerbezogene Daten und der anonymisierte erste Datensatz an ein erstes Serversystem (3) übermittelt werden;
**dadurch gekennzeichnet, dass**
- die übermittelten nutzerbezogenen Daten mittels des ersten Serversystems (3) gelöscht werden; und
- der anonymisierte erste Datensatz nach der Löschung der nutzerbezogenen Daten mittels des ersten Serversystems (3) an ein zweites Serversystem (4) übermittelt wird.

2. Verfahren nach Anspruch 1,
**dadurch gekennzeichnet, dass**
- das erste Serversystem (3) eine Vielzahl von Serverknoten (3a, 3b, 3c, 3d, 3e) beinhaltet;
- mittels der Fahrzeugrecheneinheit (6) und/oder mittels des ersten Serversystems (3) eine Übertragungsroute festgelegt wird, welche wenigstens zwei Serverknoten (3a, 3c, 3e) der Vielzahl von Serverknoten (3a, 3b, 3c, 3d, 3e) beinhaltet;
- der anonymisierte erste Datensatz gemäß der Übertragungsroute von einem Eintrittsknoten (3a) der wenigstens zwei Serverknoten (3a, 3c, 3e) zu einem Austrittsknoten (3e) der wenigstens zwei Serverknoten (3a, 3c, 3e) übermittelt wird; und
- der anonymisierte erste Datensatz mittels des Austrittsknotens (3e) an das zweite Serversystem (4) übermittelt wird.

3. Verfahren nach Anspruch 2,
**dadurch gekennzeichnet, dass**
die nutzerbezogenen Daten mittels des Eintrittsknotens (3a) gelöscht werden.

4. Verfahren nach einem der Ansprüche 2 oder 3,
**dadurch gekennzeichnet, dass**
die Übertragungsroute mittels der Fahrzeugrecheneinheit (6) und/oder mittels des ersten Serversystems (3) zufällig festgelegt.

5. Verfahren nach einem der vorhergehenden Ansprüche,
**dadurch gekennzeichnet, dass**
- der anonymisierte erste Datensatz vor dessen Übermittlung an das erste Serversystem (3) mittels der Fahrzeugrecheneinheit (6) verschlüsselt wird; und
- der verschlüsselte anonymisierte erste Datensatz mittels des zweiten Serversystems (4) entschlüsselt wird.

6. Verfahren nach einem der Ansprüche 1 bis 4,
**dadurch gekennzeichnet, dass**
- der anonymisierte erste Datensatz vor dessen Übermittlung an das erste Serversystem (3) mittels der Fahrzeugrecheneinheit (6) mehrfach verschlüsselt wird;
- der verschlüsselte anonymisierte erste Datensatz mittels des ersten Serversystems (3) teilweise entschlüsselt wird; und
- der teilweise entschlüsselte anonymisierte erste Datensatz mittels des zweiten Serversystems (4) entschlüsselt wird.

7. Verfahren nach einem der Ansprüche 5 oder 6,
**dadurch gekennzeichnet, dass**
- mittels des zweiten Serversystems (4) ein Erfolg des Löschens der nutzerbezogenen Daten überprüft wird; und
- die Entschlüsselung mittels des zweiten Serversystems (4) in Abhängigkeit von einem Ergebnis der Überprüfung durchgeführt wird.

8. Verfahren nach einem der vorhergehenden Ansprüche,
**dadurch gekennzeichnet, dass**
die nutzerbezogenen Daten eine IP-Adresse der Fahrzeugrecheneinheit (6) beinhalten und/oder eine der Fahrzeugrecheneinheit (6) zugeordnete Kennung beinhalten.

9. Verfahren nach einem der vorhergehenden Ansprüche
**dadurch gekennzeichnet, dass**
- die Anonymisierung mittels der Fahrzeugrecheneinheit (6) basierend auf einem vorgegebenen Parametersatz durchgeführt wird;
- mittels des zweiten Serversystems (4) basierend auf dem anonymisierten ersten Datensatz ein durch die Anonymisierung erreichter Anonymisierungsgrad bestimmt wird; und
- mittels des zweiten Serversystems (4) basierend auf dem Anonymisierungsgrad ein angepasster Parametersatz erzeugt und an die Fahrzeugrecheneinheit (6) übermittelt wird.

10. Verfahren nach Anspruch 9,
**dadurch gekennzeichnet, dass**
der vorgegebene Parametersatz eine Verzögerungsdauer enthält und der anonymisierte erste Datensatz mittels der Fahrzeugrecheneinheit (6) gemäß der Verzögerung zeitverzögert an das erste Serversystem (3) übermittelt wird.

11. Verfahren nach einem der Ansprüche 9 oder 10,
**dadurch gekennzeichnet, dass**
mittels des zweiten Serversystems (4) basierend auf dem anonymisierten ersten Datensatz eine Anzahl von Kraftfahrzeugen bestimmt wird, auf die der anonymisierten Datensatzes bezogen werden kann und der Anonymisierungsgrad abhängig von der Anzahl bestimmt wird.

12. Verfahren nach einem der Ansprüche 9 bis 11,
**dadurch gekennzeichnet, dass**
- mittels des Kraftfahrzeugs (5) ein zweiter Datensatz erzeugt wird und der zweite Datensatz mittels der Fahrzeugrecheneinheit (6) basierend auf dem angepassten Parametersatz anonymisiert wird; und
- der anonymisierte zweite Datensatz mittels der Fahrzeugrecheneinheit (6) an das erste Serversystem (3) übermittelt wird.

13. Serversystemverbund zur Nutzung von Daten eines Kraftfahrzeugs (5), der Serversystemverbund (2) aufweisend ein erstes Serversystem (3), das dazu eingerichtet ist, von dem Kraftfahrzeug (5) einen anonymisierten ersten Datensatz sowie nutzerbezogenen Daten zu erhalten,
**dadurch gekennzeichnet, dass**
- das erste Serversystem (3) dazu eingerichtet ist, die übermittelten nutzerbezogenen Daten zu löschen;
- der Serversystemverbund (2) ein zweites Serversystem (4) aufweist; und
- das erste Serversystem (3) dazu eingerichtet ist, den anonymisierten ersten Datensatz an das zweite Serversystem (4) zu übermitteln.

14. Serversystemverbund nach Anspruch 13,
**dadurch gekennzeichnet, dass**
- das erste Serversystem (3) eine Vielzahl von Serverknoten (3a, 3b, 3c, 3d, 3e) beinhaltet;
- das erste Serversystem (3) dazu eingerichtet ist, eine Übertragungsroute, die wenigstens zwei Serverknoten (3a, 3c, 3e) der Vielzahl von Serverknoten (3a, 3b, 3c, 3d, 3e) beinhaltet, festzulegen oder von dem Kraftfahrzeug (5) zu erhalten;
- das erste Serversystem (3) dazu eingerichtet ist, den anonymisierten ersten Datensatz gemäß der Übertragungsroute von einem Eintrittsknoten (3a) der wenigstens zwei Serverknoten (3a, 3c, 3e) zu einem Austrittsknoten (3e) der wenigstens zwei Serverknoten (3a, 3c, 3e) zu übermitteln; und
- der Austrittsknoten (3e) dazu eingerichtet ist, den anonymisierten ersten Datensatz an das zweite Serversystem (4) zu übermitteln.

15. Kommunikationssystem aufweisend einen Serversystemverbund (2) nach einem der Ansprüche 13 oder 14 sowie die Fahrzeugrecheneinheit (6) für das Kraftfahrzeug (5), wobei die Fahrzeugrecheneinheit (6) dazu eingerichtet ist,
- einen durch das Kraftfahrzeug (5) erzeugten ersten Datensatz zu anonymisieren, um den anonymisierten ersten Datensatz zu erzeugen; und
- den anonymisierten ersten Datensatz an das erste Serversystem (3) zu übermitteln.
